# EUROPEAN PATENT APPLICATION

(11) **EP 0 832 864 A1**
(43) Date of publication of application: **01.04.1998**
(21) Application number: 97307486.7
(22) Date of filing: 24.09.1997
(51) Int. Cl.: C04B 41/49, C04B 28/02, C09D 183/04, C09D 4/04, C09D 4/06

(54) **Infiltrative water-absorption preventing material**

(30) Priority: 24.09.1996 JP 251220/96
(71) Applicant: TOYO INK MANUFACTURING CO., LTD., Tokyo (JP)
(72) Inventor: Suzuki, Takehiro, 3-13 Kyobashi 2-chome, Chuo-ku, Tokyo (JP); Shiono, Kenji, 3-13 Kyobashi 2-chome, Chuo-ku, Tokyo (JP); Shimada, Kenshiro, 3-13 Kyobashi 2-chome, Chuo-ku, Tokyo (JP)
(74) Representative: Woods, Geoffrey Corlett

(57) **Abstract**

An infiltrative water absorption preventing material suitable for application to a porous inorganic construction material, which is a water-based emulsion comprising an alkylalkoxysilane, an oil-soluble dye, an emulsifier and water.

## Description

### Field of the Invention

The present invention relates to an infiltrative water-absorption preventing material for porous inorganic construction materials such as concrete, which material is applied to the surface of a porous inorganic construction material for staining the surface and forming a surface hydrophobic layer and which fades in a staining color with retaining the hydrophobic layer.

### Prior Art

It has been well known that an alkylalkoxysilane is useful as a water repellent or an infiltrative water-absorption preventing material for porous inorganic construction materials such as concrete. In recent years, in view of durability, an infiltrative water-absorption preventing material which protects a porous inorganic construction material by infiltrating a surface-forming layer and forming a hydrophobic layer to prevent the penetration of water and salts is more highly evaluated than a water repellent which merely imparts a surface with water repellency. An alkylalkoxysilane which has excellent infiltrativity and forms a strong hydrophobic layer by a chemical reaction is therefore increasingly demanded. In general, materials prepared by diluting alkylalkoxysilanes with various solvents have been used. However, these materials are limited in use due to their properties such as toxicity, volatility and ignitability.

For example, a material prepared by diluting an alkylalkoxysilane with isopropyl alcohol, which has relatively low toxicity, exhibits limited infiltrativity into a substrate since it evaporates rapidly. In principle, further, an organic solvent has a problem that the application thereof to a wet concrete surface is not feasible. Moreover, a silane-containing infiltrative water-absorption preventing material containing no organic solvent has been demanded in view of environmental problems. For overcoming the above problems, the following means have been devised and commercialized.
1) An alkylalkoxysilane is applied as it is.
2) An alkylalkoxysilane is hydrolyzed and applied in the form of an aqueous solution.
3) An alkylalkoxysilane is converted to an aqueous dispersion, and the dispersion is applied.

However, the above means involve the following new problems.
1) An alkylalkoxysilane has a high flash point and is less dangerous. However, it is among dangerous products under the Fire Service Law, and it cannot be any fundamental environmental improvement to transport and use an alkylalkoxysilane as it is. Further, it is difficult to apply an alkylalkoxysilane to a wet surface.
2) When an alkylalkoxysilane undergoes hydrolysis, silane molecules are liable to undergo condensation. As a result, when it is solubilized in water, the pot life thereof decreases. Therefore, an alkylalkoxysilane is brought in and solubilized in water in a site where it is used, and it is required to use all of the solubilized alkylalkoxysilane in the site. That is, this procedure requires complicated pieces of work, and further, it is poor in economic performance.
3) An aqueous dispersion of an alkylalkoxysilane is found to retain a water-absorption preventing effect for a long period of time, and it is useful as a protective material for concrete, etc. Since, however, an alkylalkoxysilane having a low molecular weight infiltrates the interior of a substrate, it is difficult to check whether or not the application is completed immediately after it is applied. For overcoming the above problem, JP-A-06-172677 discloses a method in which an aqueous emulsion water repellent is added. However, the completion of the application is confirmed only in a portion where water is sprayed.

It is therefore desired to develop a water-based dispersion of an alkylalkoxysilane which retains the surface state of concrete itself without showing a wet color or impairing a final appearance of concrete and which permits the visual checking of completion of the application to the entire concrete surface. "Wet color" refers to a state where a concrete surface shows "gloss" or "luster", and impairs the appearance of a concrete surface texture.

### Summary of the Invention

It is an object of the present invention to provide an infiltrative water-absorption preventing material containing a water-based emulsion of an alkylalkoxysilane which permits the visual checking of the application to an entire application surface when it is applied to the surface of a porous inorganic consutruction material such as concrete.

According to the present invention, there is provided an infiltrative water-absorption preventing material which is a water-based emulsion containing an alkylalkoxysilane, an oil-soluble dye, water and an emulsifier.

Further, in the infiltrative water-absorption preventing material according to the present invention, the concentration of the oil-soluble dye in the water-based emulsion is 0.01 to 0.2 % by weight.

Further, in the infiltrative water-absorption preventing material according to the present invention, droplets of the alkylalkoxysilane in the water-based emulsion have a diameter of 0.5 to 10 µm.

### Detailed Description of the Invention

The present inventors have arrived at the present invention by finding the following. When an aqueous emulsion of an alkylalkoxysilane contains an oil-soluble dye, and when the water-based emulsion is applied to a porous inorganic construction material such as concrete, the surface of the construction material is stained, a surface hydrophobic layer is formed, and then the dye fades in color with retaining the hydrophobic layer.

The alkylalkoxysilane used in the present invention refers to a compound in which at least one alkyl group having 6 to 20 carbon atoms and at least one alkoxy group selected from methoxy, ethoxy or propoxy are directly bonded to a silicon atom. The alkoxy group is particularly preferably an ethoxy group. Further, a monoalkyltrialkoxysilane is particularly preferred. Although not specially limited, the alkylalkoxysilane is selected from hexyltriethoxysilane, heptyltriethoxysilane, octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane, nonadecyltriethoxysilane and eicosyltriethoxysilane. The above alkylalkoxysilanes may be used alone or in combination.

When the at least one alkyl group directly bonding to a silicon atom has less than 6 carbon atoms, the alkylalkoxysilane shows extremely high hydrolyzability and high volatility, part of alkylalkoxysilane molecules react with a substrate surface immediately after the application of the infiltrative water-absorption preventing material, and the infiltration of the material (emulsion) is therefore deferred. Further, since unreacted silane components are easily volatile, water repellency is consequently imparted to a substrate surface alone. When the at least one alkyl group directly bonding to a silicon atom has more than 20 carbon atoms, the material (emulsion) does not easily infiltrate a substrate since its molecular weight is too large.

When the alkoxy group is methoxy, the alkylalkoxysilane shows somewhat poor stability under an alkaline condition. Therefore, it is liable to bond to a substrate surface or undergo a crosslinking reaction before the material infiltrates a substrate, and the alkylalkoxysilane shows poor stability in a water-based dispersion. On the other hand, when the alkoxy group has a carbon chain of which the number of carbon atoms is greater than the number of carbon atoms of a propoxy group, undesirably, the alkylalkoxysilane is too stable to bond to a substrate even after it infiltrates the substrate, since it takes too long a time to exhibit an effect.

The concentration of the alkylalkoxysilane in the water-based emulsion is preferably 1 to 70 % by weight, more preferably 5 to 70 % by weight. When the above concentration of the alkylalkoxysilane is lower than the above lower limit, it is difficult to impart a porous inorganic construction material such as concrete with the performance of sufficient water-absorption prevention by carrying out the application once. Further, as the number of times of the application is increased, the infiltrability of the alkylalkoxysilane into a porous inorganic construction material decreases. When the above concentration exceeds 70 % by weight, it is difficult to decrease the size of droplets of the alkylalkoxysilane in the water-based emulsion to an optimum diameter (0.5 to 10 µm), and the stability of the emulsion also decreases.

Although not specially limited, the oil-soluble dye is selected, for example, from "C. I. Solvent Yellow 2, 14, 16, 33, 56, 82 or 93", "C. I. Solvent Red 3, 8, 18, 24, 27, 49, 109, 132 or 218", "C. I. Solvent Blue 2, 14, 5, 35, 38, 70 or 94", "C. I. Basic Blue 7", "C. I. Solvent Green 3", "C. I. Solvent Violet 8", "Solvent Black 3, 7, 27, 29 or 34", or "C. I. Solvent Orange 45 or 62". The above dyes may be used alone or in combination.

The oil-soluble dye used in the present invention is preferably a dye which, after the application of the water-absorption preventing material, stains a substrate surface, retains the staining such that the staining is visually observed for about one month and fades out color (loses its staining color) within three months (after the application). For adjusting weatherability, at least two oil-soluble dyes having different degrees of weatherability may be used.

It is not preferred to use an oil-soluble dye which has such a low molecular weight that it infiltrates a substrate together with a silane, an oil-soluble dye which has such a high weatherability that it hardly fades in color after the application or an oil-soluble dye which has such a poor weatherability that it completely fades or loses its staining color in about one week.

The present invention does not use a water-soluble dye, since its hydrophilic group acts on the emulsifier or an alkoxysilyl group to cause an adverse effect on the stability of the emulsion or since it is washed away by rain when it rains soon after the application of the material.

The concentration of the oil-soluble dye in the water-based emulsion is preferably 0.01 to 0.2 % by weight. When the above concentration of the oil-soluble dye is less than 0.01 % by weight, the degree of the staining on a substrate surface is too low to visually observe the staining. When the above concentration is more than 0.2 % by weight, not only the oil-soluble dye remains non-uniformly on a substrate surface in the form of a powder, but also it has an adverse effect on the stability of the emulsion.

The emulsifier is not specially limited, and it can be selected from an anionic emulsifier, a nonionic emulsifier, a cationic emulsifier or an amphoteric emulsifier.

The amount of the emulsifier based on the silane component is 0.1 to 50 % by weight, preferably 0.1 to 5 % by weight. When the above amount of the emulsifier is less than 0.1 % by weight, it is difficult to obtain a stable emulsion. When the above amount exceeds 50 % by weight, it is difficult to obtain the performance of sufficient water-absorption prevention.

Although not specially limited, the anionic emulsifier includes fatty acid salt, alkyl sulfate, alkyl aryl sulfonic acid salt, alkyl naphthalene sulfonic acid salt, dialkyl sulfosuccinic acid salt, alkyl diaryl ether disulfonic acid salt, alkyl phosphoric acid salt, polyoxyethylene alkyl ether sulfuric acid salt, polyoxyethylene alkyl aryl ether sulfuric acid salt, naphthalene sulfonic acid formalin condensate, polyoxyethylene alkyl phosphste, glycerol borate fatty acid ester and polyoxyethylene glycerol fatty acid ester.

Although not specially limited, the nonionic emulsifer includes polyoxyethylene alkyl ether, polyoxyethylene alkyl aryl ether, a polyoxyethylene oxypropylene block copolymer, sorbitan fatty acid ester, polyoxyethylene sorbitan fatty acid ester, polyoxyethylene sorbitol fatty acid ester, glycerin fatty acid ester, polyoxyethylene fatty acid ester, polyoxyethylenealkylamine, a fluorine-containing nonionic emulsifier and a silicone-containing nonionic emulsifier.

Although not specially limited, the cationic emulsifier includes alkylamine salt, quaternary ammonium salt, alkyl pyridinium salt and alkyl imidazolium salt.

Although not specially limited, the amphoteric emulsifier includes alkylbetaine, alkylamine oxide, phosphatidyl choline (also called lecithin).

The above emulsifiers may be used alone or in combination, while it is the most preferred to use an anionic emulsifier and a nonionic emulsifier in combination. When an anionic emulsifier and a nonionic emulsifier are used in combination, the alkylalkoxysilane can be emulsified with a small amount of a combination of the emulsifiers, and as a result, there is almost no adverse effect of the emulsifier on the water resistance of the water-absorption preventing material. When the anionic emulsifier and the nonionic emulsifier are used in combination, the amount of the anionic emulsifier based on the total emulsifier amount is preferably 0.01 to 20 % by weight. When the above emulsifiers are used alone or when the amount of the anionic emulsifier exceeds 20 % by weight in the above case, it may be difficult to produce a stable emulsion, or the emulsion may undergo phase separation.

The water-based emulsion of the alkylalkoxysilane, provided by the present invention, may contain additives such as a pH adjusting agent, an antiseptic, an anti-mold agent, a fungicide and an antifoamer as required so long as they do not cause any adverse effect on the dispersibility and the performance of the infiltrative water-absorption preventing material.

The pH adjusting agent is added for preventing the hydrolysis of the alkylalkoxysilane by adjusting the pH of the water-based emulsion to a weakly alkaline side in the range of from a pH 7 to a pH 9.5. The pH adjusting agent is selected from various alkaline compounds and buffers.

The water-based emulsion of the alkylalkoxysilane, provided by the present invention, can be obtained by emulsifying the alkylalkoxysilane, the oil-soluble dye, water, the emulsifier and optionally other additives with a dispersing machine.

The dispersing machine can be selected from emulsifying and dispersing machines suitable for emulsification to form an emulsion having a low viscosity, such as a high-speed emulsification dispersing machine "T.K. Homomixer" supplied by Tokushuki Kako Kogyo, an untra-fine particle emulsification dispersing device "T.K. Micromizer" supplied by Tokushuki Kako Kogyo, an ultra-high pressure emulsification dispersing system "T.K. Nanomizer" supplied by Tokushuki Kako Kogyo, a high-speed fine particle-forming machine "Ultratalax" supplied by IKA-MASCHINENABU, "Clearmix" supplied by M. Technique, and a hydraulic ultra-high pressure homogenizer "Microfluidizer" supplied by Mizuho Kogyo. When the emulsification is carried out at a high speed or under a high pressure with the above emulsifying and dispersing machine, the temperature of a liquid may increase so that the emulsification power decreases in some cases. It is therefore preferred to maintain the liquid temperature at 50°C or lower by cooling a container or some other means.

Droplets of the alkylalkoxysilane in the water-based emulsion are preferably adjusted to a diameter of 0.5 to 10 µm, more preferably to a diameter of 2 to 10 µm. The diameter of droplets of the alkylalkoxysilane can be adjusted depending upon emulsification conditions such as the kind, the stirring rate or the nozzle ejection pressure of the emulsifying and dispersing machine and the time for the emulsification. In the present invention, the droplets of the alkylalkoxysilane in the water-based emulsion are measured for diameters by sandwiching an emulsion sample between a preparation and a cover glass without including any bubbles, taking a photograph through an optical microscope and comparing found diameters with a scale.

When droplets of the alkylalkoxysilane in the water-based emulsion have a diameter of 0.5 to 10 µm, the droplets are stably dispersed, and even in one year or more, the emulsion is simply separated into an opaque layer of a silane-concentrated emulsion and a colorless tranparent layer of water so that these separated layers can be re-emulsified easily. Further, since the alkylalkoxysilane forms droplets, and since a major part of the alkylalkoxysilane, i.e., silane inside each of the droplets is out of contact to water, the alkylalkoxysilane is rarely hydrolyzed.

When the water-based emulsion contains silane droplets having a diameter of more than 10 µm, the droplets are liable to collide with one another to form droplets having greater diameters, and silane itself separates. The re-emulsification is therefore difficult.

Further, it cannot be said that the smaller the diameter of the silane droplets is, the better. When the diameter of the silane droplet is too small, alkoxysilyl groups and water come into contact with each other with a higher probability, and the alkylalkoxysilane is liable to be easily hydrolyzed. Undesirably, therefore, ethanol is formed by the hydrolysis, the emulsion is broken so that the re-emulsification is difficult, a concrete surface to which the emulsion is applied shows a wet color, the emulsion undergoes gelation, and the pot life of the emulsion is extremely decreased.

### Examples

The present invention will be explained further in detail with reference to Examples hereinafter.

### Example 1

500 Grams of n-hexyltriethoxysilane, 0.3 g of an oil-soluble dye ("Aizen SOT dye Green-3", supplied by Hogogaya Chemical Industry, a mixture of a product corresponding to C. I. Solvent Red 18 with C. I. Solvent Blue 25), 2.0 g of polyoxyethylene (20 mol) stearyl ether, 0.02 g of sodium laurylsulfate, 2.0 g of a 1 % sodium hydroxide aqueous solution, 0.5 g of an antiseptic (1,2-benzoisothiazolin-3-one), 2.0 g of an anti-mold agent (2-n-octyl-4-isothiazolin-3-one) and 500 g of water were stirred with a homomixer at a rotation rate of about 5,000 rpm for 60 minutes, to give a greenish white water-based emulsion. The emulsion was observed through an optical microscope to show that silane droplets had a diameter of about 5 µm and that no droplets had a diameter of more than 10 µm.

### Example 2

A greenish white water-based emulsion was obtained in the same manner as in Example 1 except that the amount of "Aizen SOT dye Green-3" was changed from 0.3 g to 1.0 g. The emulsion was observed through an optical microscope to show that silane droplets had a diameter of about 5 µm and that no droplets had a diameter of more than 10 µm.

### Example 3

A bluish white water-based emulsion was obtained in the same manner as in Example 1 except that "Aizen SOT dye Green-3" was replaced with an oil-soluble dye "Aizen SOT dye Blue-1" (C. I. Solvent Blue 25, supplied by Hodogaya Chemical Industry). The emulsion was observed through an optical microscope to show that silane droplets had a diameter of about 5 µm and that no droplets hada diameter of more than 10 µm.

### Example 4

A reddish white water-based emulsion was obtained in the same manner as in Example 1 except that "Aizen SOT dye Green-3" was replaced with an oil-soluble dye "Aizen SOT dye Red-3" (C. I. Solvent Red 18, supplied by Hodogaya Chemical Industry). The emulsion was observed through an optical microscope to show that silane droplets had a diameter of about 5 µm and that no droplets had a diameter of more than 10 µm.

### Example 5

A pale greenish white water-based emulsion was obtained in the same manner as in Example 1 except that the amount of "Aizen SOT dye Green-3" was changed from 0.3 g to 0.05 g. The emulsion was observed through an optical microscope to show that silane droplets had a diameter of about 5 µm and that no droplets had a diameter of more than 10 µm.

### Example 6

A greenish white water-based emulsion was obtained in the same manner as in Example 1 except that the amount of "Aizen SOT dye Green-3" was changed from 0.3 g to 5.0 g. The emulsion was observed through an optical microscope to show that silane droplets had a diameter of about 5 µm and that no droplets had a diameter of more than 10 µm.

### Comparative Example 1

A white water-based emulsion was obtained in the same manner as in Example 1 except that 0.3 g of "Aizen SOT dye Green-3" was not used. The emulsion was observed through an optical microscope to show that silane droplets had a diameter of about 5 µm and that no droplets had a diameter of more than 10 µm.

### Comparative Example 2

A bluish white water-based emulsion was obtained in the same manner as in Example 1 except that "Aizen SOT dye Green-3" was replaced with a water-soluble edible dyestuff "Blue No. 1" (Brilliant Blue-FCF, supplied by Aizen"). The emulsion was observed through an optical microscope to show that silane droplets had a diameter of about 5 µm and that no droplets had a diameter of more than 10 µm.

The water-based emulsions obtained in Examples 1 to 6 and Comparative Examples 1 and 2 were tested as follows. Table 1 shows the results.

### (Observation of applied surface)

An emulsion was applied to a bottom surface of a mortar test piece (JIS R 5201) having a size of 7 cm x 7 cm x 2 cm at a rate of 300 g/m², and dried at room temperature for 24 hours. The applied surface was observed for a color.

### (Color fading out on applied surface)

The mortar test piece used in the above "observation of applied surface" was placed in a sunny place outdoors in a state where the applied surface was exposed at 45° from a horizontal direction toward South. And, the applied surface was observed after one week, one month and three months.

### (Depth of infiltration)

An emulsion was applied to a bottom surface of a mortar test piece (JIS R 5201) having a size of 7 cm x 7 cm x 2 cm at a rate of 300 g/m², and dried at room temperature for 24 hours. The test piece was cut, a 5 % methylene blue aqueous solution was applied to a cut cross section, and a hydrophobic layer which was not colored was measured for a thickness in five places to calculate an average.

### (Water absorption test)

An emulsion was applied to the entire surface of a mortar test piece (JIS R 5201) having a size of 7 cm x 7 cm x 2 cm at a rate of 300 g/m², and dried at room temperature for 24 hours. Then, the test piece was subjected to a water absorption test according to JIS A 1404, to determine a 24 hour water absorption ratio thereof to a non-applied test piece (blank).

### (Emulsion stability test)

50 Grams of an emulsion was placed in 100 cc sample bottles and the bottles were sealed. The bottles were allowed to stand in one of two states (at 60°C for 1 month or at 25°C for 3 months) to visually observe an emulsion state (separation state: top layer/bottom layer).

### (Re-emulsification test)

After the emulsion stability test, the sample bottles were shaken 30 times and allowed to stand at room temperature for 1 hour to visually observe a re-emulsification state (O: Emulsified, X: Not emulsified)

### (Wet color test)

After the re-emulsification test, the sample bottles were again shaken 30 times. Before the separation started, the emulsion was applied to a bottom surface of a mortar test piece at a rate of 300 g/m², and dried at room temperature for 7 days. The applied surface was visually observed to see whether or not the surface showed a wet color.

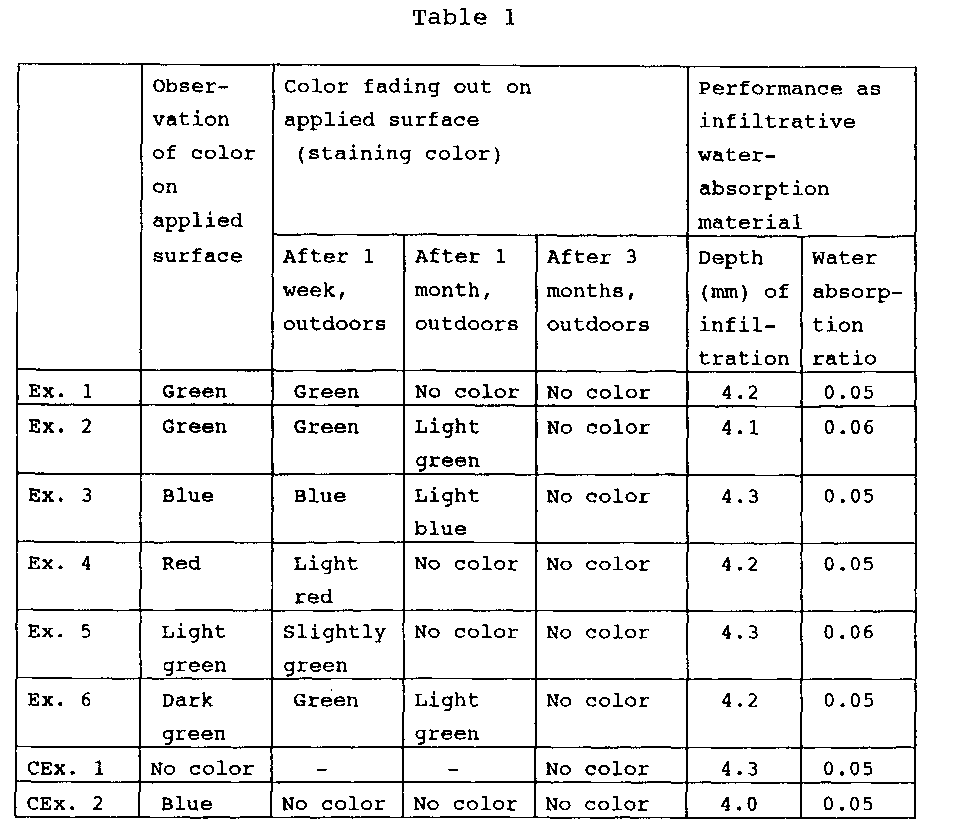

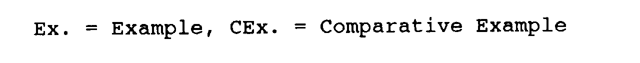

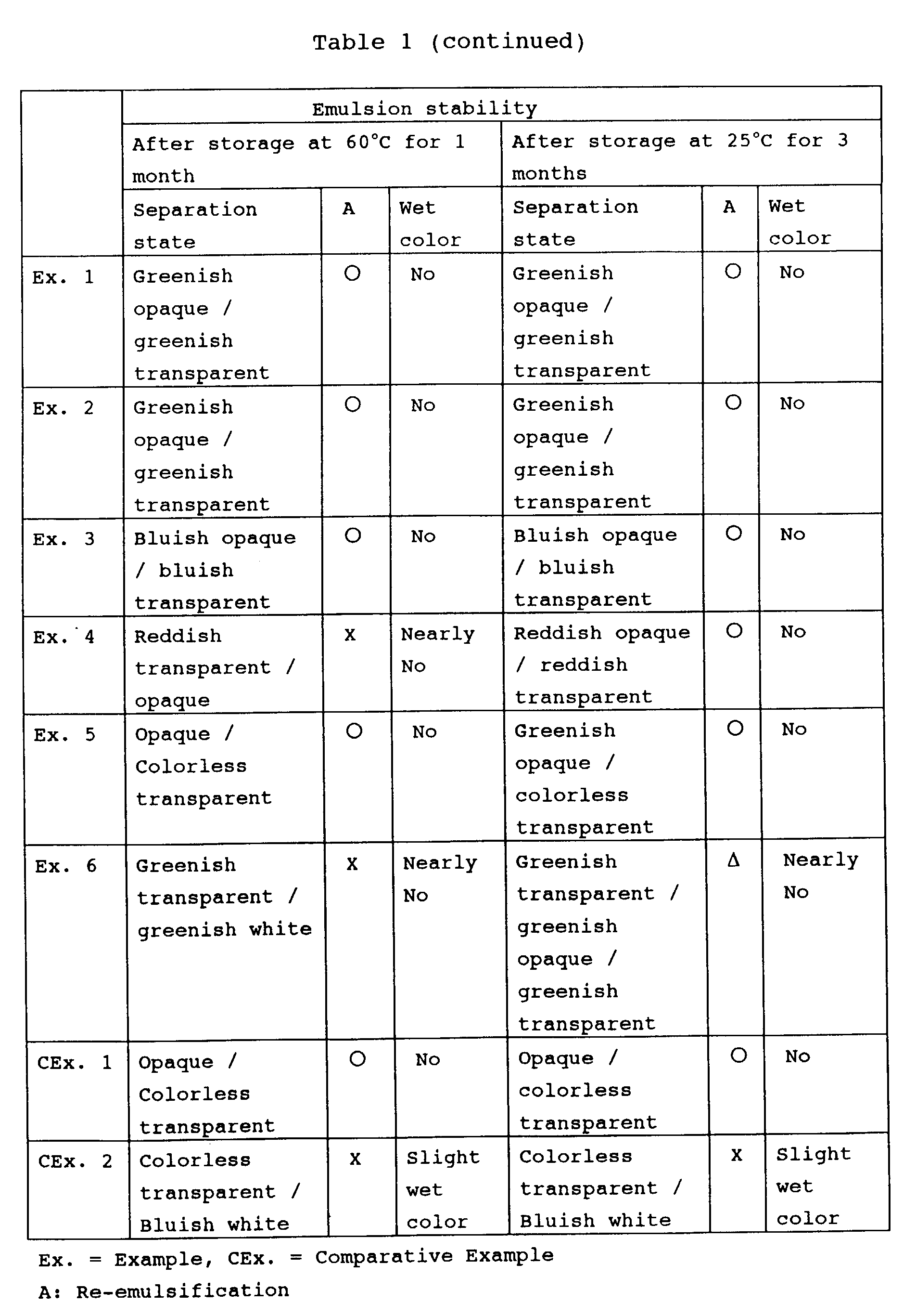

When the infiltrative water-absorption preventing material containing a water-based emulsion of an alkylalkoxysilane, provided by the present invention, is applied to a porous inorganic construction material such as concrete, the surface of the construction material is stained, a surface hydrophobic layer is formed, and then the dye fades out colour or loses its staining colour with retaining the hydrophobic layer. It is therefore easy to confirm the completion of the application, and the above infiltrative water-absorption preventing material is useful for preventing the water absorption of porous inorganic construction materials such as concrete.

Typically, the infiltrative water absorption preventing material of the invention consists essentially of the said alkylalkoxysilane, dye, emulsifier and water. In some cases, the infiltrative water absorption preventing material of the invention consists of the said alkylalkoxysilane, dye, emulsifier and water and at least one additive selected from a pH adjusting agent, an antiseptic, an anti-mould agent, a fungicide and an antifoamer.

## Claims

1. An infiltrative water absorption preventing material suitable for application to a porous inorganic construction material, which is a water-based emulsion comprising an alkylalkoxysilane, an oil-soluble dye, an emulsifier and water.

2. A material according to claim 1, wherein the alkylalkoxysilane is a compound in which at least one C₆-C₂₀ alkyl group and at least one C₁-C₃ alkoxy group are directly bonded to a silicon atom.

3. A material according to claim 1 or 2, wherein the alkylalkoxysilane is a monoalkylalkoxysilane.

4. A material according to any one of the preceding claims which comprises 1 to 70% by weight of the alkylalkoxysilane and/or 0.01 to 0.2% by weight of the oil-soluble dye and/or 0.1 to 50% by weight, based on the silane component, of the emulsifier.

5. A composition according to any one of the preceding claims, wherein the oil-soluble dye fades or loses its staining colour within 3 months after application of the emulsion to a porous inorganic construction material.

6. A material according to any one of the preceding claims, wherein the emulsifier is a mixture of an anionic emulsifier with a nonionic emulsifier and the amount of the anionic emulsifier based on the total amount of the emulsifiers is 0.01 to 20% by weight.

7. A material according to any one of the preceding claims, wherein the alkylalkoxysilane in the water-based emulsion is present in the form of droplets having a diameter of 0.5 to 10µm.

8. A process for water-proofing a porous inorganic construction material, which process comprises applying to the surface of the construction material a composition according to any one of claims 1 to 7.

9. A process according to claim 8, wherein the porous inorganic construction material is concrete.

10. A treated porous inorganic construction material obtainable by a process according to claim 8 or 9.
